# EUROPÄISCHE PATENTSCHRIFT

(11) **EP 1 899 102 B1**
(45) Veröffentlichungstag und Bekanntmachung des Hinweises auf die Patenterteilung: **10.06.2009**
(21) Anmeldenummer: 06754282.9
(22) Anmeldetag: 10.06.2006
(51) Int. Cl.: B23K 9/32, B24C 1/00, B24C 5/04, B08B 5/02

(54) **REINIGUNGSVORRICHTUNG FUR LICHTBOGENSCHWEISS- ODER SCHNEIDBRENNER MIT EINER ZWEI KONZENTRISCH ZUEINANDER ANGEORDNETE AUSTRITTSBEREICHE AUFWEISENDEN STRAHLMITTELDÜSE SOWIE EIN ENTSPRECHENDES VERFAHREN**
CLEANING DEVICE FOR AN ARC WELDING TORCH OR CUTTING TORCH COMPRISING A JET NOZZLE WITH TWO CONCENTRIC EXIT REGIONS AND CORRESPONDING METHOD
DISPOSITIF DE NETTOYAGE POUR CHALUMEAU DE SOUDAGE OU DE DECOUPAGE A L'ARC COMPRENANT UNE BUSE A AGENT DE GRENAILLAGE QUI PRESENTE DEUX ZONES DE SORTIE CONCENTRIQUES, ET PROCEDE CORRESPONDANT

(30) Priorität: 02.07.2005 DE 102005030928
(43) Veröffentlichungstag der Anmeldung: 19.03.2008
(73) Patentinhaber: Alexander Binzel Schweisstechnik GmbH & Co. KG, 35418 Buseck (DE)
(72) Erfinder: SCHUBERT, Emil, 35469 Allendorf-Lumda (DE); FABER, André, 35463 Fernwald (DE)
(74) Vertreter: Müller, Eckhard
(86) Internationale Anmeldenummer: PCT/EP2006/005584
(87) Internationale Veröffentlichungsnummer: WO 2007/003256

(56) Entgegenhaltungen:
- WO-A-20/05102584
- US-A- 4 360 949
- US-A- 4 431 135
- US-A1- 2003 024 917
- PATENT ABSTRACTS OF JAPAN Bd. 1998, Nr. 10, 31. August 1998 (1998-08-31) -& JP 10 113871 A (SUGINO MACH LTD), 6. Mai 1998 (1998-05-06)
- PATENT ABSTRACTS OF JAPAN Bd. 017, Nr. 520 (M-1482), 20. September 1993 (1993-09-20) -& JP 05 138361 A (MITSUBISHI HEAVY IND LTD), 1. Juni 1993 (1993-06-01)
- PATENT ABSTRACTS OF JAPAN Bd. 013, Nr. 148 (M-812), 11. April 1989 (1989-04-11) -& JP 63 309379 A (TOYOTA MOTOR CORP), 16. Dezember 1988 (1988-12-16)

## Beschreibung

Die Erfindung betrifft eine Vorrichtung zum Reinigen eines Lichtbogenschweiß- oder Schneidbrenners gemäß dem Oberbegriff des Anspruchs 1 und ein dementsprechendes Reinigungsverfahren zur Reinigung der Funktionsteile des Lichtbogenschweiß- oder Schneidbrenners gemäß dem Oberbegriff des Anspruchs 16, wie Gasdüse, Stromdüse oder dergleichen, mit einem kalten Strahlmittel.

### Stand der Technik

Reinigungsvorrichtungen sowie Reinigungsverfahren zum Reinigen von Schweiß- oder Schneidbrennern mittels eines kalten Strahlmittels oder Strahlmittelgemischs, wie zum Beispiel CO₂-Pellets und Druckluft oder CO₂-Schnee und Druckluft, sind als solche im Stand der Technik bekannt siehe, z.B., WO 2005/102 584. Diese auf Kaltstrahltechnik basierenden Reinigungsverfahren nutzen die unterschiedlichen Wärmeausdehnungseigenschaften der Funktionsteile des Brenners und der daran anhaftenden Verunreinigungen, wie z.B. Schweißspritzer, welche sich bei Beaufschlagung der Funktionsteile des Brenners mit dem kalten Strahlmittel aufgrund der auftretenden Thermospannung vom den Funktionsteilen lösen.

Auf den Einsatz mechanischer Reinigungswerkzeuge, beispielsweise von Fräswerkzeugen, Drahtbürsten oder dergleichen, deren Verwendung stets mit einer teils nicht unerheblichen Beanspruchung der Funktionsteile des Brenners einhergeht, kann daher verzichtet werden.

So ist beispielsweise aus der WO 02/49794 A1 ein Verfahren und eine Vorrichtung zum Reinigen von Schweißbrennern unter Einsatz der Kaltstrahltechnik bekannt. Hierbei wird das kalte Strahlmittel oder das kalte Strahlmittelgemisch gleichmäßig oder in Intervallen auf eine zu reinigende Fläche geblasen. Mittels mehrerer verdrehbarer Strahldüsen können des Weiteren definierten Abschnitte des Schweißbrenners unter einem bestimmten veränderlichen Winkel gereinigt werden. Nachteilig hierbei ist jedoch, dass die Reinigungsleistung dieser Vorrichtung nicht bis zu den Gaseintrittsbohrungen seitlich des Brenners wirksam werden kann.

Problematisch ist zudem das Reinigen der Gasdüse, welches sowohl von außen als auch von innen zu erfolgen hat. Die rotierende Strahlmitteldüse richtet hierbei das Strahlmittel stets auf einen dem Rotationswinkel der Düse entsprechenden Teilbereich im Inneren der Gasdüse und ist nur bedingt für ein vollständiges Reinigen der Funktionsteile des Brenners ausgelegt.

Des Weiteren ist aus der WO 2005/102584 A1 ein mehrstufiges Reinigungsverfahren bekannt, bei dem in einer ersten Stufe die Reinigungshülse eines Reinigungskopfes in einem vom Außendurchmesser der Gasdüse abhängigen Abstand vor der Gasdüse positioniert wird. In diesem Abstand erfolgt dann in einem ersten Reinigungsschritt die Reinigung der Gasaustrittsöffnung durch Beaufschlagung mit CO₂-Schnee. Danach wird der Schweißbrenner mit dem Kontaktrohr in die Reinigungshülse der Reinigungsvorrichtung eingeführt, so dass ein anschließendes Reinigen des Kontaktrohres und des Innenbereichs der Gasdüse erfolgt.

Weiterhin offenbart die WO 2005/102584 A1 ein Reinigungsrohr mit Innenbohrungen, die in Form eines ringartig ausgebildeten Düsenkranzes angeordnet sind. So werden dort z.B. auch zwei voneinander abgesetzte Reinigungsrohre mit entsprechend in Axialrichtung voneinander abgesetzten Düsenkränzen beschrieben.

### Problem

Nachteilig bei diesem zweistufigen Reinigungsprozess ist das exakte Positionieren des Schweißbrenners vor der Reinigungsvorrichtung und insbesondere das passgenaue Einführen des Kontaktrohres des Brenners in die Reinigungshülse der Reinigungsstation. Insbesondere ist zur Vermeidung von Kollisionen hierfür zumeist eine recht aufwändige Sensorik erforderlich. Insbesondere bei manuell oder handbetätigten Schweiß- oder Schneidbrennern kann ein solches passgenaues Positionieren nicht gewährleistet werden, und beim Einführen der Kontaktdüse in die Reinigungshülse kann es zu Beschädigungen kommen, die dann ein Unterbrechen des Reinigungsvorgangs bzw. ein Abschalten der gesamten Schweißanlage zu Wartungszwecken erfordern.

Der Erfindung liegt demgegenüber die Aufgabe zugrunde, eine Reinigungsvorrichtung der eingangs beschriebenen Art so weiter zu entwickeln, dass ein vollständiges Reinigen der Funktionsteile des Schweiß- oder Schneidbrenners in einem einzigen Schritt beziehungsweise durch Positionieren des Brenners an einer einzigen vorgegebenen Reinigungsposition erfolgen kann.

### Erfindung und vorteilhafte Wirkungen

Die der Erfindung zugrunde liegende Aufgabe wird mit einer Reinigungsvorrichtung gemäß Patentanspruch 1 sowie mittels eines Reinigungsverfahrens gemäß Patentanspruch 16 gelöst.
Weitere vorteilhafte Ausführungen der Erfindung sind in den jeweiligen Unteransprüchen gegeben.

Die Erfindung betrifft eine Vorrichtung zum Reinigen eines Lichtbogenschweiß- oder Schneidbrenners, insbesondere das Reinigen seiner Funktionsteile, wie Gasdüse und Kontaktbeziehungsweise Stromdüse oder dergleichen von Verunreinigungen, beispielsweise Metallspritzern, mittels einer Strahlmitteldüse zum Beaufschlagen der Funktionsteile mit einem kalten Strahlmittel, wie zum Beispiel CO₂-Pellets, flüssigem CO₂ oder CO₂-Schnee auch in Kombination mit Druckluft.

Die erfindungsgemäße Vorrichtung weist hierbei eine Strahlmitteldüse mit zumindest zwei konzentrisch zueinander angeordneten Austrittsbereichen für das Strahlmittel auf. Diese zumindest zwei Austrittsbereiche sind baulich voneinander getrennt und ermöglichen ein zielgerichtetes und gleichzeitiges Beaufschlagen nahezu sämtlicher zu reinigender Funktionsteile des Brenners mit dem kalten Strahlmittel. Hierbei erfährt der aus der Reinigungsvorrichtung austretende Strahl eine entsprechende Strahlformung. Ein Positionieren oder Verfahren des Brenners in verschiedene Reinigungspositionen relativ zur Reinigungsvorrichtung ist daher nicht mehr erforderlich.

Folglich kann der Schweiß- oder Schneidbrenner durch Positionieren in einer einzigen vorgegebenen Reinigungsposition nahezu vollständig von Verunreinigungen gereinigt werden.

Gemäß der Erfindung siehe Ansprüche 1 und 16 sind die zumindest zwei Austrittsbereiche als innerer und äußerer Austrittsbereich ausgebildet, und die Strahlmitteldüse weist dementsprechend ein inneres und ein äußeres Führungselement, insbesondere eine innere und äußere Hülse auf. Die innere und äußere Hülse sind zur Bildung konzentrischer Austrittsbereiche konzentrisch zueinander angeordnet. Die innere Hülse beziehungsweise das innere Führungselement ist hierbei vollständig von dem äußeren Führungselement beziehungsweise von der äußeren Hülse umgeben.

Beim Reinigen des Brenners strömt das Strahlmittel sowohl durch die innere Hülse als auch durch den von innerer und äußerer Hülse gebildeten Zwischenraum. Nach Durchströmen durch das innere und das äußere Führungselement tritt das Strahlmittel aus den beiden Austrittsbereichen typischerweise unter unterschiedlichen Winkeln aus, wodurch insbesondere ein gleichmäßiges und/oder vollständiges Beaufschlagen der Funktionsteile des Brenners mit dem Strahlmittel erfolgen kann.

Nach einer Weiterbildung der Erfindung ist die Strahlmitteldüse einstückig ausgebildet, das heißt, innere und äußere Hülse der Strahlmittelsdüse bilden eine einzige bauliche Einheit, wobei die innere und die äußere Hülse vorzugsweise mittels einer Stegverbindung miteinander verbunden sind. Eine einstückige Ausgestaltung der Strahlmitteldüse, bestehend aus innerem und äußerem Führungselement ist insbesondere zur Befestigung der Strahlmitteldüse an der Reinigungsvorrichtung als auch zur Auswechslung der Strahlmittelsdüse, beispielsweise zu Reinigungs- oder Revisionszwecken, von Vorteil.

Insbesondere ist vorgesehen, dass die Strahlmitteldüse lösbar am Gehäuse der Reinigungsvorrichtung befestigt ist.

Nach einer vorteilhaften Ausgestaltung der Erfindung ist die S.trahlmitteldüse mittels einer über das äußere Führungselemente aufsteckbaren Überwurfmutter am Gehäuse der Reinigungsvorrichtung befestigbar. Die Überwurfmutter ist hierbei auf ein im Bereich der Strahlmitteldüse angeordnetes gehäuseseitiges Gewinde aufschraubbar, was den Austausch oder die Reinigung der Strahlmitteldüse selbst erheblich vereinfacht.

Zusätzlich ist ein gehäuseseitiges Haltemittel und ein damit zusammenwirkendes Gegenhaltemittel der Strahlmitteldüse zum Halten der Strahlmitteldüse am Gehäuse der Reinigungsvorrichtung vorgesehen. Das Gegenhaltemittel der Strahlmitteldüse ist hierbei vorzugsweise am äußeren Führungselement beziehungsweise an der äußeren Hülse der Strahlmitteldüse angeordnet. Vorzugsweise sind als Haltemittel bzw. als Gegenhaltemittel ein Zylinder- oder Passstift bzw. eine dem Zylinder- oder Passstift entsprechend ausgebildete Aufnahme vorgesehen.

Vorzugsweise ist der Zylinder- oder Passstift gehäuseseitig an der Reinigungsvorrichtung angeordnet und ist auf die Strahlmitteldüse am äußeren Führungselement als Gegenhaltemittel aufsteckbar.

Nach einer weiteren Ausführungsform der Erfindung sind im Bereich des inneren und des äußeren Führungselements der Strahlmitteldüse Auslassöffnungen für das Strahlmittel vorgesehen. Diese vorzugsweise gehäuseseitig angeordneten Auslassöffnungen sind zum Beispiel durch Bohrungen ausgebildet.

Nach einer Weiterbildung der Erfindung kann das Strahlmittel selektiv und unabhängig beim Reinigungsprozess durch einzelne Auslassöffnungen in die unterschiedlichen Führungselemente beziehungsweise Führungsbereiche der Strahlmitteldüse geleitet werden.

Weiterhin ist vorgesehen, dass die im inneren Austrittsbereich der Strahlmitteldüse zum Liegen kommenden Auslassöffnungen in einem größeren Abstand vom Gehäuse der Reinigungsvorrichtung als die im äußeren Austrittsbereich der Strahlmitteldüse vorgesehenen Auslassöffnungen angeordnet sind. Somit stehen die inneren Ausl.assöffnungen für das Strahlmittel gegenüber den äußeren Auslassöffnungen vom Gehäuse der Vorrichtung hervor. Dadurch dass die vor dem inneren und äußeren Austrittsbereich vorgesehenen Auslassöffnungen in unterschiedlichen Abständen vom Gehäuse beziehungsweise vom freien Ende der Strahlmitteldüse beabstandet angeordnet sind, können insbesondere unterschiedliche Öffnungswinkel der aus den unterschiedlichen Austrittsbereichen austretenden Teilstrahlen erzeugt werden.

Nach einer weiteren bevorzugten Ausführungsform der Erfindung ist die Geometrie des inneren Führungselements im Wesentlichen an die Geometrie der Stromdüse des Lichtbogenschweiß- oder Schneidbrenners angepasst.

Weiterhin ist vorgesehen, dass die Geometrie des äußeren Führungselements der Strahlmitteldüse im Wesentlichen an die Geometrie der Gasdüse des Lichtboge-nschweiß-/oder Schneidbrenners.angepasst ist. Dementsprechend ist das aus dem inneren Führungselement beziehungsweise aus dem inneren Austrittsbereich austretende Strahlmittel zur Reinigung der Strom- oder Kontaktdüse des Brenners vorgesehen, während das aus dem äußeren Austrittsbereich beziehungsweise das aus dem äußeren Austrittsbereich der Strahlmitteldüse austretende Strahlmittel im Wesentlichen zum Reinigen der Gasdüse dient.

Insbesondere ist das innere Führungselement auch zur Reinigung des Innenbereichs der Gasdüse ausgebildet, während der aus dem äußeren Führungselement austretende Reinigungsstrahl vorzugsweise der Reinigung der Außenwandung der Gasdüse dient. Die Anpassung der Geometrie der Führungselemente, respektive der Strahlmitteldüse an die Geometrie der zu reinigenden Funktionsteile des Schweiß- oder Schneidbrenners in Kombination mit der lösbaren Befestigung der Strahlmitteldüse am Gehäuse der Reinigungsvorrichtung ermöglicht ein universelles Anpassen der Reinigungsvorrichtung an verschiedenartige Brenner mit unterschiedlichen Abmessungen des Brennerkopfes. Somit kann die Reinigungsvorrichtung an eine Vielzahl unterschiedlicher Schweiß- oder Schneidbrenner durch Auswechslung entsprechender Strahldüsen universell adaptiert werden.

Weiterhin ist vorgesehen, dass das innere Führungselement beziehungsweise die innere Hülse zur Erzeugung eines im Wesentlichen zur Reinigung der Stromdüse vorgesehenen inneren Strahls und das äußere Führungselement beziehungsweise die äußere Hülse der Strahlmitteldüse zur Erzeugung eines im Wesentlichen zur Reinigung der Gasdüse des Lichtbogenschweiß-oder Schneidbrenners vorgesehenen äußeren Strahls ausgebildet ist. Der innere, vom inneren Führungselement erzeugte Strahl dient hierbei zusätzlich zum Reinigen des Innenbereichs der Gasdüse des Schweiß- oder Schneidbrenners.

Typischerweise sind die Öffnungswinkel der beiden aus der Strahlmitteldüse austretenden Teilstrahlen unterschiedlich und dienen somit dem gleichzeitigen und nahezu vollständigen Beaufschlagen sämtlicher Funktionsteile des Brenners mit dem Strahlmittel. Insbesondere kann der innere Strahl einen im Vergleich zum äußeren Strahl kleineren Öffnungswinkel aufweisen. Falls erforderlich kann jedoch auch der äußere Strahl einen geringeren Öffnungswinkel als der innere Strahl aufweisen. Vorteilhafte Öffnungswinkel zur Reinigung der Funktionsteile ergeben sich aus der Geometrie der Führungselemente und den Abmessungen der Brennerfunktionsteile sowie anhand des vorgegebenen oder vorgesehenen Abstandes zwischen Brenner und Strahlmitteldüse beim Reinigungsvorgang.

Weiterhin ist vorgesehen, dass zumindest das äußere Führungselement der Strahlmitteldüse einen Querschnitt aufweist, der zumindest im Bereich des Querschnitts des Spritzerrings des Lichtbogenschweiß- oder Schneidbrenners liegt. Insbesondere ist bei einer radialsymmetrischen Ausgestaltung der Strahlmitteldüse und des Spritzerrings der freie Durchmesser des Spritzerrings typischerweise kleiner als der Außendurchmesser der äußeren Führungshülse der Strahlmitteldüse. Hierdurch wird in einfacher Art und Weise verhindert, dass sich beim Reinigen des Brenners ein sich lösender Spritzerring auf die Reinigungsdüse fällt und somit den Reinigungsvorgang beeinträchtigt.

Aufgrund dieser Ausgestaltung kann zudem auf den Einsatz von Druckluft zur Vermeidung eines Herunterfallens des Spritzrings vom Brennerkopf verzichtet werden. Zwar wird ein Herabgleiten des Spritzerrings am Brennerkopf nicht unbedingt verhindert, jedoch kann dieser aufgrund der Abmessungen der Strahlmitteldüse auf dieser nicht zum Liegen kommen.

Nach einer weiteren bevorzugten Ausführungsform der Erfindung steht das freie Ende des inneren Führungselementes gegenüber dem freien Ende des äußeren Führungselementes vor. Dementsprechend weist das innere Führungselement bzw. die innere Hülse in axialer Richtung eine größere Erstreckung als das äußere Führungselement bzw. die äußere Führungshülse auf.

Insbesondere bei solchen Ausführungsformen, bei denen die im inneren Austrittsbereich der Strahlmitteldüse zu Liegen kommenden Auslassöffnungen in einem größeren Abstand vom Gehäuse der Reinigungsvorrichtung als die im äußeren Austrittsbereich der Strahlmitteldüse vorgesehenen Auslassöffnungen angeordnet sind, kann auch das innere Führungselement in Längsrichtung kürzer als das äußere Führungselement ausgebildet sein und trotzdem bezogen auf das freie Ende des äußeren Führungselementes von diesem hervorstehen.

Die freien Enden der Führungselemente entsprechen hierbei stets den vom Gehäuse der Reinigungsvorr.ichtung abgewandten Enden der Führungselemente, die die beiden Austrittsbereiche für das Strahlmittel bilden.

Nach einem weiteren unabhängigen Gedanken betrifft die Erfindung ein Verfahren zum Reinigen eines Lichtbogenschweiß-oder Schneidbrenners, insbesondere seiner Funktionsteile, wie Gasdüse, Stromdüse oder dergleichen, von Verunreinigungen durch Beaufschlagen jener Funktionsteile mit einem kalten Strahlmittel. Bei dem erfindungsgemäßen Verfahren ist insbesondere ein gleichzeitiges Beaufschlagen von Gasdüse und Stromdüse mit dem Strahlmittel vorgesehen, so dass ein einstufiges Reinigungsverfahren zum im Wesentlichen vollständigen Reinigen des Brennerkopfes und seiner Funktionsteile ermöglicht wird.

Das gleichzeitige Reinigen der Funktionsteile erfolgt hierbei mittels zweier aus zwei konzentrisch zueinander angeordneten Austrittsbereichen der Strahlmitteldüse austretenden Teilstrahlen.

Diese Teilstrahlen weisen insbesondere Unterschiedliche Öffnungswinkel auf.

Insbesondere wird der Brennerkopf großflächig mit dem kalten Strahlmittel beaufschlagt, so dass ein Einführen einer Strahlmitteldüse in den Innenraum der Gasdüse des Brenners nicht mehr erforderlich ist. Eine mitunter aufwendige Sensorik mittels der ein Touchieren oder Kollidieren der Strahlmitteldüse mit der Brennergasdüse verhindert wird, ist daher nicht mehr erforderlich. Die Gefahr von Beschädigungen der Strahlmitteldüse beziehungsweise der Funktionsteile des Brennerkopfes wird hierdurch minimiert, da zum einen der zu reinigende Brennerkopf nur an einer vorgegebenen Reinigungsposition während des Reinigungsprozesses gehalten werden muss.

Zum anderen ist aufgrund der großflächigen Beaufschlagung des Brennerkopfes und des Gasdüseninnenraums mit dem Strahlmittel ein absolut exaktes bzw. passgenaues Positionieren des Brennerkopfes bezüglich der Strahlmitteldüse nicht mehr erforderlich.

Demzufolge sind beim erfindungsgemäßen Reinigungsverfahren Positioniergenauigkeiten zwischen Brennerkopf und Strahlmitteldüse bis zu einem gewissen Grad ohne wesentliche Beeinträchtigung des Reinigungsergebnisses tolerierbar.

Das Reinigungsverfahren wird insbesondere mittels zweier aus zwei Austrittsbreichen der Strahlmitteldüse austretenden Teilstrahlen durchgeführt, die unterschiedliche Öffnungswinkel zum Beaufschlagen sämtlicher Funktionsteile des Lichtbogenschweiß- oder Schneidbrenners mit Strahlmittel aufweisen.

Insbesondere kann hierdurch ein einstufiges Reinigungsverfahren durchgeführt werden, bei dem der Lichtbogenschweiß- oder Schneidbrenner an einer einzigen vorgegebenen Reinigungsposition vor den Austrittsbereichen der Reinigungsvorrichtung gehalten wird.

Weitere Ziele, Vorteile und Merkmale vorliegender erfindung werden anhand eines Ausführungsbeispieles mithilfe der nachfolgenden Figuren beschrieben. Dabei bilden alle beschriebenen und/oder bildlich dargestellten Merkmale für sich und/oder in beliebiger sinnvoller Kombination den Gegenstand der vorliegenden Erfindung, auch unabhängig von den Patentansprüchen und deren Zusammenfassung.

### Es zeigen:

- Figur 1: eine perspektivische Ansicht einer möglichen Ausführungsform einer erfindungsgemäßen Reinigungsvorrichtung,
- Figur 2: eine vergrößerte Ansicht des gehäuseseitigen Aufnahmebereichs für die Strahlmitteldüse,
- Figur 3: eine der Figur 2 entsprechende Darstellung mit Zylinderstift zum Fixieren der Strahlmitteldüse,
- Figur 4: eine der.Figuren 2 und 3 entsprechende Darstellung mit aufgesteckter Strahlmitteldüse,
- Figur 5: die mittels Überwurfmutter befestigte Strahlmitteldüse,
- Figur 6: eine Seitenansicht des Schneid- oder Schweißbrenners in Reinigungsposition vor der Strahlmitteldüse und
- Figur 7: eine vergrößerte Darstellung der Seitenansicht gemäß Figur 6.

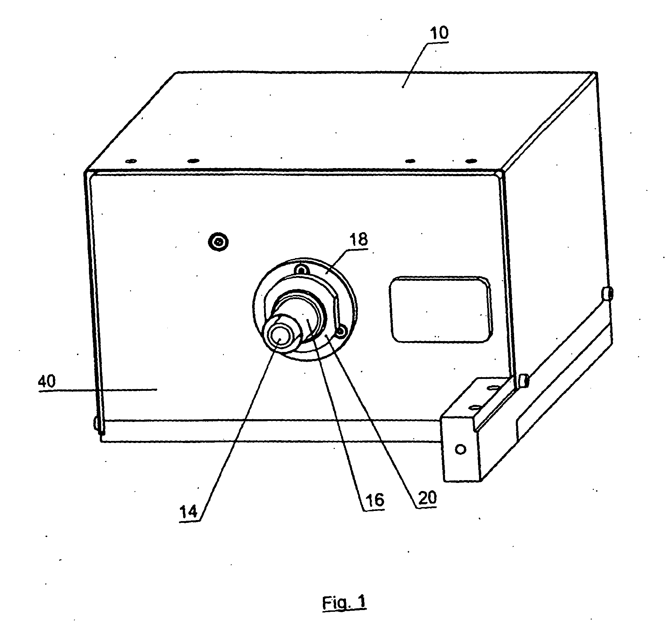

Figur 1 zeigt in perspektivischer Darstellung eine Reinigungsvorrichtung 10 an deren Gehäuse 40 die Strahlmitteldüse 12 angeordnet ist. Die Strahlmitteldüse 12 ist hierbei mittels einer Überwurfmutter 20 an einer gehäuseseitigen Aufnahme 18 der Reinigungsvorrichtung 10 befestigt. Zum Reinigen wird der Brenner 44 in einem vorgegebenen Abstand vor der Strahlmitteldüse 12 positioniert und mit dem kalten Strahlmittel während des Reinigungsprozesses beaufschlagt.

Die Strahlmitteldüse 12 weist gemäß der Erfindung zwei konzentrisch angeordnete, als Hülsen ausgestaltete, Führungselemente 14, 16 auf. Während des Reinigungsprozesses tritt das Strahlmittel unter unterschiedlichen Öffnungswinkeln sowohl aus der inneren Hülse 14 als auch aus dem Zwischenraum 24 zwischen innerer Hülse 14 und äußerer Hülse 16 aus. Diese zweiteilige Ausgestaltung der. Führungshülse 12 sorgt insbesondere für ein großflächiges und zielgerichtetes Beaufschlagen des zu reinigenden Brennerkopfs und seiner Funktionsteile mit dem kalten Strahlmittel.

Folglich muss die Strahlmitteldüse 12 nicht in die Gasdüse 46 des Brenners 44 zu Reinigungszwecken eingeführt werden, und der gesamte Reinigungsprozess kann in einem einzigen Schritt durchgeführt werden, wobei der Brenner 44 bezüglich der Position der Strahlmitteldüse 12 stationär gehalten werden kann.

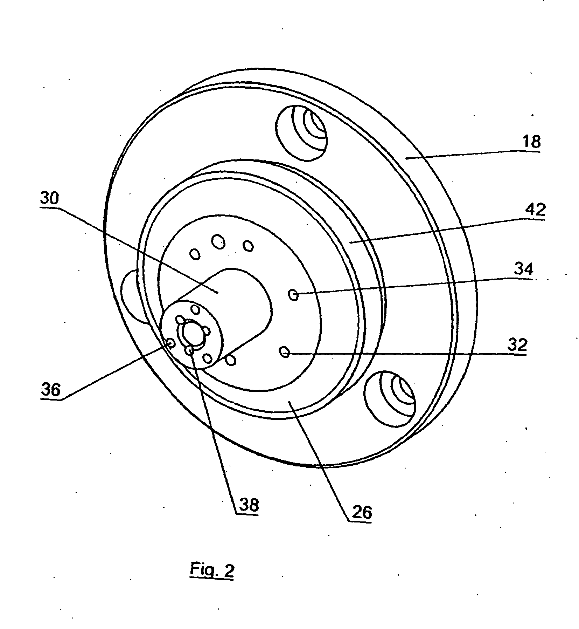

Figur 2 zeigt eine vergrößerte Darstellung der gehäuseseitigen Aufnahme 18 für die Strahlmitteldüse 12. Die (hier nicht dargestellte) Strahlmitteldüse 12 ist von der Reinigungsvorrichtung 10 demontiert und gibt den Blick auf einen an der Aufnahme 18 angeordneten Ring 26 mit einem daran hervorstehenden Zylinderbereich 30 frei. Der Ring 26 weist typischerweise ein umfangsseitiges Gewinde 42 auf, auf welches die Überwurfmutter 20 zur Befestigung der Strahlmitteldüse 12 aufgeschraubt wird. Der Ring 26 wie auch der hervorstehende Zylinderbereich 30 weisen stirnseitig einzelne Auslassöffnungen 32, 34 sowie 36, 38 für das Strahlmittel oder Strahlmittelgemisch auf.

Die direkt am Ring 26 angeordneten Auslassöffnungen 32, 34 sind im Bereich für die äußere Hülse 16 und die im Bereich des hervorstehenden Zylinderbereichs 30 angeordneten Auslassöffnungen 36, 38 sind im Bereich der inneren Hülse 14 angeordnet. Die am hervorstehenden Zylinderbereich 30 ausgebildeten Auslassöffnungen 36, 38 weisen hierbei einen größeren Abstand als die Auslassöffnungen 32, 34 von der Gehäusewand 40 der Reinigungsvorrichtung 10 auf. Diese Ausgestaltung bzw. Anordnung der Auslassöffnungen 32, 34, 36, 38 ist zur Erzeugung von Teilstrahlen mit unterschiedlichen Öffnungswinkeln vorteilhaft.

Anstelle oder in Kombination des oder mit dem hervorstehenden Zylinderbereich 30 können die einzelnen, radial unterschiedlich von der Achse der Strahlmitteldüse 12 beabstandeten Auslassöffnungen 32, 34, 36, 38 auch unterschiedliche Durchmesser zum Erzeugen von Teilstrahlen mit unterschiedlichen Öffnungswinkeln aufweisen.

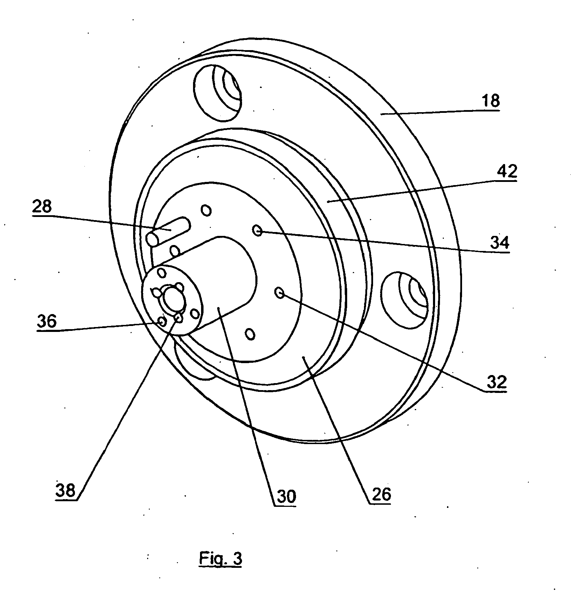

In Figur 3 ist zusätzlich ein Zylinderstift 28 am Ring 26 angeordnet, der mit einer damit zusammenwirkenden Aufnahme der äußeren Hülse 16 der Strahlmitteldüse 12 zum Halten der Strahlmitteldüse 12 an der Aufnahme 18 zusammenwirkt. Die (nicht dargestellte) Aufnahme für den Zylinder- oder Passstift 28 ist entweder in die Wandung der Hülse 16 oder im Zwischenbereich zwischen der Hülse 16 und der inneren Hülse 14 an der äußeren Hülse 16 angeordnet. Der Zylinder- oder Passstift 28 dient somit einem Halten und einer drehsicheren Fixierung der Strahlmitteldüse 12 an der Aufnahme 18.

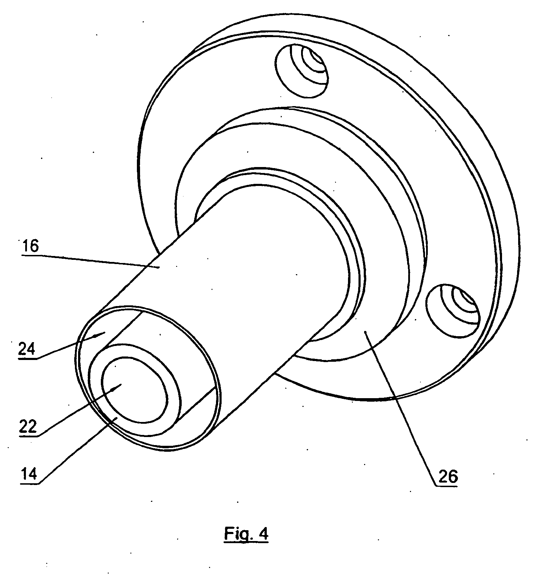

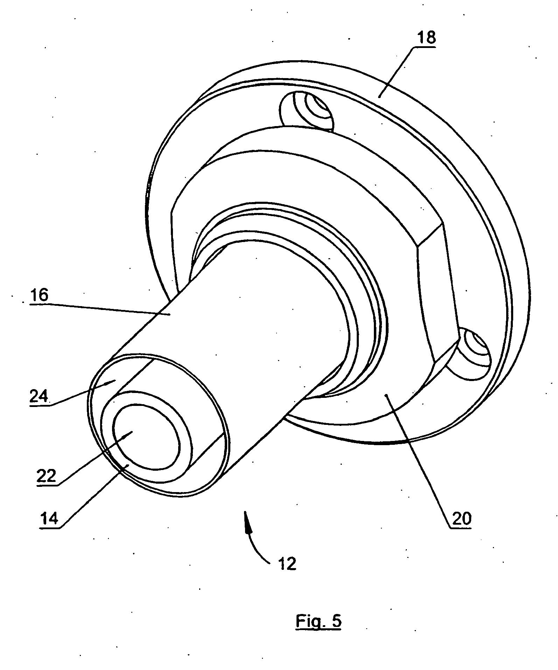

Figuren 4 und 5 zeigen schließlich die einen inneren 22 und einen äußeren Austrittsbereich 24 für das Strahlmittel aufweisende Strahlmitteldüse 12, die mittels einer Überwurfmutter 20 an der Halterung 18 lösbar befestigt ist. Die Überwurfmutter 20 wird hierbei über die äußere Hülse 16 der Strahlmitteldüse 12 geschoben und mit dem Ring 26 verschraubt. Mittels dieser Verschraubung wird die Strahlmitteldüse 12 zum einen sicher am Gehäuse 40 der Reinigungsvorrichtung 10 befestigt und kann zum anderen in einfacher Weise durch einige wenige Handgriffe zu Reinigungs-und Wartungszwecken von der Reinigungsvorrichtung 10 gelöst oder aber auch zur Anpassung der Reinigungsvorrichtung 10 an verschiedene Schneid- oder Schweißbrenner in einfacher Art und Weise ausgewechselt werden.

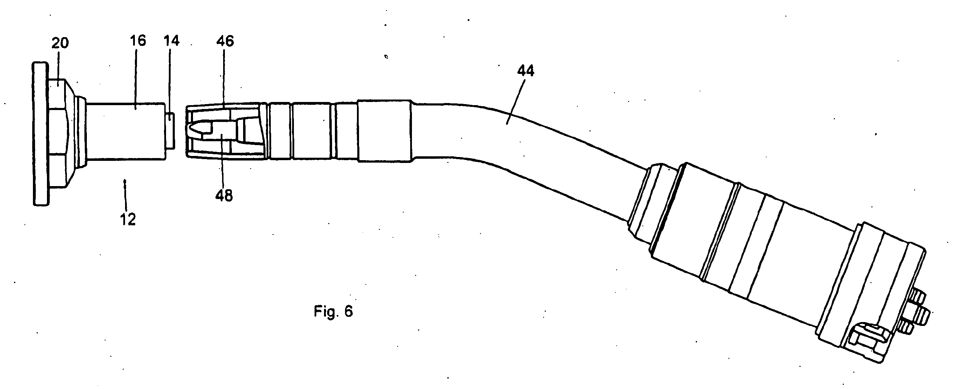

Figur 6 zeigt weiterhin den vor der Strahlmitteldüse 12 in einer Reinigungsposition angeordneten Brenner 44. Hierbei ist deutlich zu erkennen, dass das freie Ende des inneren Führungselementes 14 gegenüber dem freien Ende des äußeren Führungselementes 16 hervorsteht. Die Radien der Führungselemente 14 und 16 sind zudem an die Abmessungen der Stromdüse 48 und der Gasdüse 46 des Brenners 44 angepaßt.

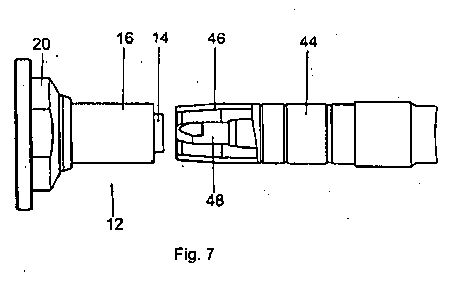

Insbesondere anhand der vergrößerten Darstellung nach Figur 7 ist zu erkennen, dass das äußere Führungselement 16 der Strahlmitteldüse 12 einen Durchmesser im Bereich des Durchmessers der Gasdüse 46 des Brenners 44 aufweist. Das mit unterschiedlichen Öffnungswinkeln aus dem inneren Führungselement 14 und zwischen innerem 14 und äußerem Führungselement 16 austretende Strahlmittel oder Strahlmittelgemisch ist in dieser Anordnung dazu geeignet sowohl die Stromdüse 48 als auch den Innen- und Außenbereich der Gasdüse 46 nahezu vollständig mit Strahlmittel zu beaufschlagen.

Hierbei kann der Brenner während der gesamten Reinigungsprozedur in einer einzigen Reinigungsposition gehalten werden und muß nicht zum Reinigen der unterschiedlichen Funktionsteile in unterschiedliche Positionen verfahren werden. Die Reinigungsposition, d.h. der Abstand zwischen dem Brennerkopf und der Austrittsöffnungen der Strahlmitteldüse 12, ergibt sich je nach Geometrie der Strahlmitteldüse 12 und der zu reinigenden Funktionsteile, wie Gasdüse 46 oder Stromdüse 48.

### Bezugszeichenliste

- 10: Reinigungsvorrichtung
- 12: Strahlmitteldüse
- 14: inneres Führungselement
- 16: äußeres Führungselement
- 18: Aufnahme
- 20: Überwurfmutter
- 22: innerer Austrittsbereich
- 24: äußerer Austrittsbereich
- 26: Ring
- 28: Passstift
- 30: hervorstehender Zylinder
- 32: Austrittsöffnung
- 34: Austrittsöffnung
- 36: Austrittsöffnung
- 38: Austrittsöffnung
- 40: Gehäuse
- 42: Gewinde
- 44: Brenner
- 46: Gasdüse
- 48: Stromdüse

## Patentansprüche

1. Vorrichtung (10) zum Reinigen eines Lichtbogenschweiß- oder Schneidbrenners (44) und seiner Funktionsteile von Verunreinigungen, mit einer Strahlmitteldüse (12) zum Beaufschlagen der Funktionsteile mit einem kalten Strahlmittel, **dadurch gekennzeichnet, dass** die Strahlmitteldüse (12) zur Bildung von zumindest zwei konzentrisch zueinander angeordneten Austrittsbereichen (22, 24) für das Strahlmittel ein inneres (14) und ein äußeres (16) hülsenartiges Führungselement aufweist, die konzentrisch zueinander angeordnet sind.

2. Vorrichtung nach Anspruch 1, **dadurch gekennzeichnet, dass** die Strahlmitteldüse (12) einstückig ausgebildet ist.

3. Vorrichtung nach einem der vorhergehenden Ansprüche , **dadurch gekennzeichnet, dass** das innere und äußere Führungselement (14, 16) mittels einer Stegverbindung miteinander verbunden sind.

4. Vorrichtung nach einem der vorhergehenden Ansprüche, **dadurch gekennzeichnet, dass** die Strahlmitteldüse (12) lösbar am Gehäuse (40) der Reinigungsvorrichtung (10) befestigt ist.

5. Vorrichtung nach Anspruch 3, **dadurch gekennzeichnet, dass** die Strahlmitteldüse (12) mittels einer auf ein gehäuseseitiges Gewinde (42) aufschraubbaren und auf das äußere Führungselement (16) aufsteckbaren Überwurfmutter (20) am Gehäuse (40) befestigbar ist.

6. Vorrichtung nach einem der vorhergehenden Ansprüche, **dadurch gekennzeichnet, dass** zumindest ein gehäuseseitiges Haltemittel (28) und ein damit zusammenwirkendes, am äußeren Führungselement (16) angeordnetes Gegenhaltemittel zum Halten der Strahlmitteldüse (12) am Gehäuse (40) der Reinigungsvorrichtung (1) vorgesehen sind.

7. Vorrichtung nach Anspruch 6, **dadurch gekennzeichnet, dass** das Haltemittel (28) als Zylinderstift ausgebildet ist, welcher in eine das Gegenhaltemittel bildende Aufnahme einsteckbar ist.

8. Vorrichtung nach einem der vorhergehenden Ansprüche, **dadurch gekennzeichnet, dass** im Bereich des inneren und äußeren Führungselements (14, 16) der Strahlmitteldüse (12) Auslassöffnungen (32, 34, 36, 38) für das Strahlmittel vorgesehen sind.

9. Vorrichtung nach Anspruch 8, **dadurch gekennzeichnet, dass** die im inneren Austrittsbereich (22) vorgesehenen Auslassöffnungen (36, 38) in einem größeren Abstand vom Gehäuse (40) als die im äußeren Austrittsbereich (24) vorgesehenen Auslassöffnungen (32, 34) angeordnet sind.

10. Vorrichtung nach einem der vorhergehenden Ansprüche, **dadurch gekennzeichnet, dass** die Geometrie des inneren Führungselements (14) an die Geometrie der Stromdüse (48) des Lichtbogenschweiß- oder Schneidbrenners (44) angepasst ist.

11. Vorrichtung nach einem der vorhergehenden Ansprüche, **dadurch gekennzeichnet, dass** die Geometrie des äußeren Führungselements (16) an die Geometrie der Gasdüse (46) des Lichtbogenschweiß- oder Schneidbrenners (44) angepasst ist.

12. Vorrichtung nach einem der vorhergehenden Ansprüche, **dadurch gekennzeichnet, dass** das innere (14) und äußere Führungselement (16) der Strahlmitteldüse (12) zum Erzeugen zweier Teilstrahlen mit unterschiedlichen Öffnungswinkeln ausgebildet sind.

13. Vorrichtung nach einem der vorhergehenden Ansprüche, **dadurch gekennzeichnet, dass** das innere Führungselement (14) zur Erzeugung eines im Wesentlichen zur Reinigung der Stromdüse (48) vorgesehenen inneren Strahls und das äußere Führungselement (16) zur Erzeugung eines im Wesentlichen zur Reinigung der Gasdüse (46) des Lichtbogenschweiß- oder Schneidbrenners (44) vorgesehenen äußeren Strahls ausgebildet ist, wobei der innere Strahl vorzugsweise einen geringeren Öffnungswinkel als der äußere Strahl aufweist.

14. Vorrichtung nach einem der vorhergehenden Ansprüche, **dadurch gekennzeichnet, dass** das äußere Führungselement (16) der Strahlmitteldüse (12) einen radialen Querschnitt aufweist, der zumindest im Bereich des Querschnitts des Spritzerrings des Lichtbogenschweiß- oder Schneidbrenners (44) liegt.

15. Vorrichtung nach einem der vorhergehenden Ansprüche, **dadurch gekennzeichnet, dass** das freie Ende des inneren Führungselementes (14) gegenüber dem freien Ende des äußeren-Führungselementes (16) hervorsteht.

16. Verfahren zum Reinigen eines Lichtbogenschweiß- oder Schneidbrenners (44) und seiner Funktionsteile von Verunreinigungen durch Beaufschlagen der Funktionsteile mit einem gleichzeitigen Beaufschlagen von Gasdüse (46) und Stromdüse (48) mit einem kalten Strahlmittel, **dadurch gekennzeichnet, dass** ein Reinigen der Funktionsteile des Lichtbogenschweiß- oder Schneidbrenners (44) mittels zweier aus zwei konzentrisch zueinander angeordneten und ineinander liegenden Austrittsbereichen (22, 24) einer ein inneres (14) und ein äußeres (16) hülsenartiges Führungselement aufweisenden Strahlmitteldüse (12) austretender Teilstrahlen erfolgt.

17. Verfahren nach Anspruch 16, **dadurch gekennzeichnet, dass** die aus den Austrittsbereichen (22, 24) austretenden Teilstrahlen unterschiedliche Öffnungswinkel aufweisen.

18. Verfahren nach einem der Ansprüche 16 oder 17, **dadurch gekennzeichnet, dass** der Lichtbogenschweiß- oder Schneidbrenner (44) an einer vorgegeben Reinigungsposition vor den Austrittsbereichen (22, 24) der Reinigungsvorrichtung (10) gehalten wird.

## Claims

1. Device (10) for cleaning an arc welding or cutting torch (44) and the functional parts thereof of contaminants, comprising a blast medium nozzle (12) for action on the functional parts with a cold blast medium, **characterised in that** the blast medium nozzle (12) comprises an inner sleeve-shaped guide element (14) and an outer sleeve-shaped guide element (16), which are arranged concentrically relative to one another, for formation of at least two mutually concentrically arranged outlet zones (22, 24) for the blast medium.

2. Device according to claim 1, **characterised in that** the blast medium nozzle (12) is of integral construction.

3. Device according to one of the preceding claims, **characterised in that** the inner and outer guide elements (14, 16) are connected together by means of a web connection.

4. Device according to any one of the preceding claims, **characterised in that** the blast medium nozzle (12) is detachably fastened to the housing (40) of the cleaning device (10).

5. Device according to claim 3, **characterised in that** the blast medium nozzle (12) is fastenable to the housing (40) by means of a box nut (20) able to be screwed onto a thread (42) at the housing side and plugged onto the outer guide element (16).

6. Device according to any one of the preceding claims, **characterised in that** at least one retaining means (28) at the housing side and a counter-retaining means, which cooperates therewith and is arranged at the outer guide element (16), are provided for retaining the blast medium nozzle (12) at the housing (40) of the cleaning device (1).

7. Device according to claim 6, **characterised in that** the retaining means (28) is constructed as a cylindrical pin insertable into a receptacle forming the counter-retaining means.

8. Device according to any one of the preceding claims, **characterised in that** outlet openings (32, 34, 36, 38) for the blast medium are provided in the region of the inner and outer guide elements (14, 16) of the blast medium nozzle (12).

9. Device according to claim 8, **characterised in that** the outlet openings (36, 38) provided in the inner outlet zone (22) are arranged at a greater spacing from the housing (40) than the outlet openings (32, 34) provided in the outer outlet zone (24).

10. Device according to any one of the preceding claims, **characterised in that** the geometry of the inner guide element (14) is matched to the geometry of the current nozzle (48) of the arc welding or cutting torch (44).

11. Device according to any one of the preceding claims, **characterised in that** the geometry of the outer guide element (16) is matched to the geometry of the gas nozzle (46) of the arc welding or cutting torch (44).

12. Device according to any one of the preceding claims, **characterised in that** the inner guide element (14) and outer guide element (16) of the blast medium nozzle (12) are constructed for generation of two part jets with different opening angles.

13. Device according to any one of the preceding claims, **characterised in that** the inner guide element (14) is constructed for generating an inner jet substantially provided for cleaning the current nozzle (48) and the outer guide element (16) is constructed for generating an outer jet substantially provided for cleaning the gas nozzle (46) of the arc welding or cutting torch (44), wherein the inner jet preferably has a smaller opening angle than the outer jet.

14. Device according to any one of the preceding claims, **characterised in that** the outer guide element (16) of the blast medium nozzle (12) has a radial cross-section lying at least in the region of the cross-section of the spray ring of the arc welding or cutting torch (44).

15. Device according to any one of the preceding claims, **characterised in that** the free end of the inner guide element (14) protrudes relative to the free end of the outer guide element (16).

16. Method of cleaning an arc welding or cutting torch (44) and the functional parts thereof of contaminants by acting on the functional parts with simultaneous action on gas nozzle (46) and current nozzle (48) by a cold blast medium, **characterised in that** a cleaning of the functional parts of the arc welding or cutting torch (44) is carried out by means of two part jets issuing from two outlet zones (22, 24), which are arranged concentrically with respect to one another and one within the other, of a blast medium nozzle (12) having an inner sleeve-shaped guide element (14) and an outer sleeve-shaped guide element (16).

17. Method according to claim 16, **characterised in that** the part jets issuing from the outlet zones (22, 24) have different opening angles.

18. Method according to one of claims 16 and 17, **characterised in that** the arc welding or cutting torch (44) is mounted at a predetermined cleaning position in front of the outlet zones (22, 24) of the cleaning device (10).

## Revendications

1. Dispositif (10) pour nettoyer un chalumeau de soudage ou de découpage à l'arc (44) et ses pièces fonctionnelles pour enlever les impuretés, comprenant une buse à agent de grenaillage (12) pour frapper les pièces fonctionnelles avec un agent de grenaillage froid, **caractérisé en ce que** la buse à agent de grenaillage (12) présente, pour former au moins deux régions de sortie (22, 24) pour l'agent de grenaillage, disposées concentriquement l'une par rapport à l'autre, un élément de guidage interne (14) et externe (16) en forme de douille, ces éléments de guidage étant disposés concentriquement l'un par rapport à l'autre.

2. Dispositif selon la revendication 1, **caractérisé en ce que** la buse à agent de grenaillage (12) est réalisée d'une seule pièce.

3. Dispositif selon l'une quelconque des revendications précédentes, **caractérisé en ce que** l'élément de guidage interne et l'élément de guidage externe (14, 16) sont connectés l'un à l'autre au moyen d'une connexion à ailette.

4. Dispositif selon l'une quelconque des revendications précédentes, **caractérisé en ce que** la buse à agent de grenaillage (12) est fixée de manière détachable au boîtier (40) du dispositif de nettoyage (10).

5. Dispositif selon la revendication 3, **caractérisé en ce que** la buse à agent de grenaillage (12) peut être fixée sur le boîtier (40) au moyen d'un écrou d'accouplement (20) pouvant être vissé sur un filetage (42) du côté du boîtier et pouvant être enfiché sur l'élément de guidage extérieur (16).

6. Dispositif selon l'une quelconque des revendications précédentes, **caractérisé en ce qu'**au moins un moyen de retenue (28) du côté du boîtier et un moyen de retenue conjugué coopérant avec lui, disposé sur l'élément de guidage extérieur (16), sont prévus pour retenir la buse à agent de grenaillage (12) sur le boîtier (40) du dispositif de nettoyage (1).

7. Dispositif selon la revendication 6, **caractérisé en ce que** le moyen de retenue (28) est réalisé sous forme de goupille cylindrique qui peut être enfoncée dans un logement formant le moyen de retenue'conjugué.

8. Dispositif selon l'une quelconque des revendications précédentes, **caractérisé en ce que** dans la région de l'élément de guidage interne et de l'élément de guidage externe (14, 16) de la buse à agent de grenaillage (12), on prévoit des ouvertures de sortie (32, 34, 36, 38) pour l'agent de grenaillage.

9. Dispositif selon la revendication 8, **caractérisé en ce que** les ouvertures de sortie (36, 38) prévues dans la région de sortie interne (22) sont disposées à une plus grande distance du boîtier (40) que les ouvertures de sortie (32, 34) prévues dans la région de sortie extérieure (24).

10. Dispositif selon l'une quelconque des revendications précédentes, **caractérisé en ce que** la géométrie de l'élément de guidage interne (14) est adaptée à la géométrie de la buse d'écoulement (48) du chalumeau de soudage ou de découpage à l'arc (44) .

11. Dispositif selon l'une quelconque des revendications précédentes, **caractérisé en ce que** la géométrie de l'élément de guidage extérieur (16) est adaptée à la géométrie de la buse à gaz (46) du chalumeau de soudage ou de découpage à l'arc (44).

12. Dispositif selon l'une quelconque des revendications précédentes, **caractérisé en ce que** l'élément de guidage interne (14) et l'élément de guidage externe (16) de la buse à agent de grenaillage (12) sont réalisés pour produire deux jets partiels avec des angles d'ouverture différents.

13. Dispositif selon l'une quelconque des revendications précédentes, **caractérisé en ce que** l'élément de guidage interne (14) est réalisé pour produire un jet interne prévu essentiellement pour le nettoyage de la buse d'écoulement (48) et l'élément de guidage externe (16) est réalisé pour produire un jet extérieur prévu essentiellement pour le nettoyage de la buse à gaz (46) du chalumeau de soudage ou de découpage à l'arc (44), le jet interne présentant de préférence un angle d'ouverture inférieur au jet extérieur.

14. Dispositif selon l'une quelconque des revendications précédentes, **caractérisé en ce que** l'élément de guidage extérieur (16) de la buse à agent de grenaillage (12) présente une section transversale radiale qui se situe au moins dans la région de la section transversale de la bague de pulvérisation du chalumeau de soudage ou de découpage à l'arc (44).

15. Dispositif selon l'une quelconque des revendications précédentes, **caractérisé en ce que** l'extrémité libre de l'élément de guidage interne (14) dépasse par rapport à l'extrémité libre de l'élément de guidage externe (16).

16. Procédé de nettoyage d'un chalumeau de soudage ou de découpage à l'arc (44) et de ses pièces fonctionnelles pour enlever les impuretés, en frappant les pièces fonctionnelles avec une sollicitation simultanée par la buse à gaz (46) et la buse d'écoulement (48), avec un agent de grenaillage froid, **caractérisé en ce qu'**un nettoyage des pièces fonctionnelles du chalumeau de soudage ou de découpage à l'arc (44) s'effectue au moyen de deux jets partiels sortant de deux régions de sortie (22, 24) disposées concentriquement l'une par rapport à l'autre et disposées l'une dans l'autre, d'une buse à agent de grenaillage (12), présentant un élément de guidage interne (14) et un élément de guidage externe (16) en forme de douille.

17. Procédé selon la revendication 16, **caractérisé en ce que** les jets partiels sortant des régions de sortie (22, 24) présentent des angles d'ouverture différents.

18. Procédé selon l'une quelconque des revendications 16 ou 17, **caractérisé en ce que** le chalumeau de soudage ou de découpage à l'arc (44) est maintenu sur une position de nettoyage prédéfinie avant les régions de sortie (22, 24) du dispositif de nettoyage (10).
